# EUROPEAN PATENT SPECIFICATION

(11) **EP 3 343 680 B1**
(45) Date of publication and mention of the grant of the patent: **11.09.2024**
(21) Application number: 16838883.3
(22) Date of filing: 14.06.2016
(51) Int. Cl.: H01M 4/86, H01M 4/96, H01M 8/10, H01M 8/0245, H01M 8/0243, H01M 8/1007, H01M 8/0239, H01M 8/0234, H01M 4/88, H01M 8/1018

(54) **GAS DIFFUSION ELECTRODE**
GASDIFFUSIONSELEKTRODE
ÉLECTRODE DE DIFFUSION GAZEUSE

(30) Priority: 27.08.2015 JP 2015167424
(43) Date of publication of application: 04.07.2018
(73) Proprietor: Toray Industries, Inc., Tokyo 103-8666 (JP)
(72) Inventor: HASHIMOTO, Masaru, Otsu-shi Shiga 520-8558 (JP); WAKATABE, Michio, Otsu-shi Shiga 520-2141 (JP); TANIMURA, Yasuaki, Otsu-shi Shiga 520-8558 (JP)
(74) Representative: Prüfer & Partner mbB Patentanwälte · Rechtsanwälte
(86) International application number: PCT/JP2016/067680
(87) International publication number: WO 2017/033536

(56) References cited:
- EP-A1- 1 775 788
- EP-A1- 2 889 939
- EP-A2- 2 680 352
- EP-B1- 2 680 352
- JP-A- 2004 214 173
- JP-A- 2004 214 173
- JP-A- 2006 134 648
- JP-A- 2006 134 648
- JP-A- 2012 054 111
- JP-A- 2013 201 139
- JP-A- 2013 201 139
- JP-A- 2014 241 290

## Description

### TECHNICAL FIELD

A fuel cell is a mechanism by which energy generated by reaction between hydrogen and oxygen to produce water is electrically extracted. Since fuel cells have high energy efficiency and emit only water, they are expected to become more popular as clean energy. The present invention relates to a gas diffusion electrode for use in a fuel cell. Among fuel cells, the invention particularly relates to a gas diffusion electrode for use in a polymer electrolyte fuel cell, which is used as a power supply for fuel cell vehicles, etc.

### BACKGROUND ART

An electrode for use in a polymer electrolyte fuel cell is sandwiched between two separators in a polymer electrolyte fuel cell. Such an electrode is configured to have, on each side of a polymer electrolyte membrane, a catalyst layer formed on the surface of the polymer electrolyte membrane and a gas diffusion layer formed on the outer side of the catalyst layer. As separate members for forming gas diffusion layers of electrodes, gas diffusion electrodes have been distributed. Such gas diffusion electrodes require properties such as gas diffusivity, electrical conductivity for collecting the electricity generated in the catalyst layer, and water drainage for efficiently removing moisture generated on the catalyst layer surface. In order to obtain such a gas diffusion electrode, generally, an electrically conductive porous substrate having both gas diffusion capability and electrical conductivity is used.

As an electrically conductive porous substrate, specifically, a carbon felt, a carbon paper, a carbon cloth, or the like made of carbon fiber is used. In particular, in terms of mechanical strength and the like, carbon papers are believed to be the most preferable.

Since a fuel cell is a system for electrically extracting the energy generated upon production of water by reaction between hydrogen and oxygen, an increase in the electric load, that is, an increase in the current to be extracted to the outside of the cell, causes production of a large amount of water (water vapor). At a low temperature, such water vapor is condensed into water drops, blocking pores of the gas diffusion electrode. As a result, the amount of gas (oxygen or hydrogen) supplied to the catalyst layer decreases, and when all the pores are blocked eventually, power generation ceases (this phenomenon is called "flooding").

In order to minimize the occurrence of flooding, a gas diffusion electrode is required to have water drainage. As a means for enhancing the water drainage, usually, a gas diffusion electrode including an electrically conductive porous substrate that has been subjected to water-repellent treatment is used to increase water repellency.

In addition, when the water-repellent-treated electrically conductive porous substrate as described above is directly used as a gas diffusion electrode, because its fiber mesh is coarse, large water drops are produced as a result of the condensation of water vapor. This easily leads to flooding. Therefore, in some cases, a coating solution having dispersed therein electrically conductive microparticles such as carbon black is applied to a water-repellent-treated electrically conductive porous substrate, and the coating solution is then dried and sintered to provide a so-called microporous layer (which is also referred to as microporous layer). Other roles of the microporous layer are prevention of penetration of a catalyst layer into a coarse electrically conductive porous substrate, reduction of contact resistance with a catalyst layer, and prevention of mechanical damage of an electrolyte membrane due to transfer of coarseness of an electrically conductive porous substrate to the electrolyte membrane.

Even by reduction of coarseness of the electrically conductive porous substrate using a microporous layer, mechanical damage of the electrolyte membrane cannot be avoided in cases where the microporous layer has a coarse surface or cracked surface. The microporous layer is therefore required to have a smooth surface, and to be free from cracks.

For prevention of mechanical damage of the electrolyte membrane, Patent Document 1 proposes, for example, a gas diffusion electrode having an anode-side microporous layer with a reduced surface roughness, wherein the gas diffusion electrode has a larger influence on the electrolyte membrane since the catalyst layer is thinner than the cathode side. Patent Document 2 proposes a gas diffusion electrode in which the microporous layer is formed by two layers for reduction of surface roughness of the microporous layer.

### PRIOR ART DOCUMENTS

### [Patent Documents]

[Patent Document 1] JP 2015-79639 A
[Patent Document 2] JP 2014-239028 A
[Patent Document 3] JP 2006-134648 A
[Patent Document 4] JP 2013-201139 A

### SUMMARY OF THE INVENTION

### PROBLEMS TO BE SOLVED BY THE INVENTION

In the technique disclosed in Patent Document 1, a microporous layer is formed by blade coating and press molding. However, reduction of the surface roughness by single-layer blade coating is insufficient. Although the surface roughness can be reduced by press molding, it results in a decreased gas diffusion capability due to breakage of gaps in the microporous layer. In the technique disclosed in Patent Document 2, the surface roughness can be reduced by application of two microporous layers. However, since carbon powder is used for formation of the microporous layers, cracks are generated in the microporous layers. Patent Document 3 discloses that a gas diffusion electrode is comprised of two microporous layers, wherein the first layer has microparticles and the second is comprised of a linear portion, and a surface roughness of this layer is less than 0.65 microns, however, an aspect ratio of the linear portion and a thickness of the layers are not described. In Patent Document 4, a microporous layer of a gas diffusion electrode is comprised of a carbon fiber with an aspect ratio of 1 to 50, however, a thickness of the layer is 50 µm or 150 µm in examples, so that the gas diffusivity may decrease.

### MEANS FOR SOLVING THE PROBLEMS

In order to solve the above problems, the present invention employs the following means.

A gas diffusion electrode comprising microporous layers on at least one side of an electrically conductive porous substrate,
the microporous layers having at least a first microporous layer in contact with the electrically conductive porous substrate, and a second microporous layer,
the second microporous layer containing an electrically conductive material having a linear portion.

### EFFECTS OF THE INVENTION

By use of the gas diffusion electrode of the present invention, microporous layers in which high gas diffusivity and high electrical conductivity can be secured, and which have low surface roughness and less cracks, can be obtained, so that both performances and durability can be satisfied.

### BRIEF DESCRIPTION OF THE DRAWINGS

Fig. 1 is a schematic diagram showing configuration of the gas diffusion electrode of the present invention.
Fig. 2 is a schematic layout diagram showing a preferred embodiment of an apparatus for manufacturing the gas diffusion electrode of the present invention.
Fig. 3 is a schematic layout diagram showing another preferred embodiment of an apparatus for manufacturing the gas diffusion electrode of the present invention.

### MODE FOR CARRYING OUT THE INVENTION

The present invention provides a gas diffusion electrode as defined in claim 1. Preferred embodiments are set forth in subclaims to claim 1.
The gas diffusion electrode of the present invention comprises microporous layers on at least one side of an electrically conductive porous substrate. The microporous layers have at least a first microporous layer in contact with the electrically conductive porous substrate, and a second microporous layer.

First, the electrically conductive porous substrate of such a gas diffusion electrode of the present invention is described below.

In a solid polymer fuel cell, a gas diffusion electrode is required to have high gas diffusivity for diffusing a gas supplied from a separator into a catalyst, high water drainage for discharging water produced by electrochemical reaction into the separator, and high electrical conductivity for extracting the generated current. Therefore, for the gas diffusion electrode, an electrically conductive porous substrate, which is a substrate having electrical conductivity and made of a porous body usually having a pore size within the range of 10 µm or more and 100 µm or less, is used.

Specifically, as the electrically conductive porous substrate, for example, it is preferable to use a carbon-fiber-containing porous substrate such as a carbon fiber fabric, carbon fiber paper-like body, carbon fiber non-woven fabric, carbon felt, carbon paper, or carbon cloth, or a metal porous substrate such as a foamed sintered metal, metal mesh, or an expanded metal. Among them, in terms of excellent corrosion resistance, it is preferable to use a carbon-fiber-containing electrically conductive porous substrate such as a carbon felt, carbon paper, or carbon cloth. Further, in terms of excellent "springiness", that is, the property of absorbing dimensional changes in the thickness direction of an electrolyte membrane, it is preferable to use a substrate made of carbon fiber paper-like bodies bound together with a carbide, that is, a carbon paper.

For efficient production of a gas diffusion electrode using such an electrically conductive porous substrate, it is preferred to form microporous layers continuously while a long-wound electrically conductive porous substrate is once unwound and then wound up again.

In the present invention, as the electrically conductive porous substrate, one subjected to water-repellent treatment by application of a fluorine resin is preferably used. Since a fluorine resin acts as a water-repellent resin, the electrically conductive porous substrate used in the present invention preferably contains a water-repellent resin such as a fluorine resin. Examples of the water-repellent resin contained in the electrically conductive porous substrate, that is, the fluorine resin contained in the electrically conductive porous substrate, include PTFE (polytetrafluoroethylene) (e.g., "Teflon" (registered trademark)), FEP (tetrafluoroethylene-hexafluoropropylene copolymer), PFA (perfluoroalkoxy fluoride resin), ETFA (ethylene-tetrafluoroethylene copolymer), PVDF (polyvinylidene fluoride), and PVF (polyvinyl fluoride). PTFE, which shows strong water repellency, or FEP is preferred.

The amount of the water-repellent resin is not limited, and is preferably about 0.1% by mass or more and 20% by mass or less in a total of 100% by mass of the electrically conductive porous substrate. In cases where the amount is less than 0.1% by mass, the water repellency may not be sufficiently produced, while in cases where the amount exceeds 20% by mass, pores as the gas diffusion path or the water drainage path may be blocked, or the electrical resistance may increase.

As methods for the water-repellent treatment of the electrically conductive porous substrate, a treatment technique by immersion of the electrically conductive porous substrate in a dispersion containing a generally known water-repellent resin, as well as a coating technique by application of a water-repellent resin to the electrically conductive porous substrate by die coating, spray coating, or the like may be applied. Processing by a dry process such as sputtering of a fluorine resin may also be applied. After the water-repellent treatment, a drying step and/or a sintering step may be included.

The microporous layers are described below. In the present invention, at least one side of the electrically conductive porous substrate has microporous layers. The microporous layers have at least a first microporous layer in contact with the electrically conductive porous substrate, and a second microporous layer. The microporous layers are not limited as long as it has at least two layers. The microporous layers have at least a first microporous layer which is in contact with the electrically conductive porous substrate, and a second microporous layer which is in contact with the first microporous layer and positioned as the outermost layer.

First, the first microporous layer is described. The first microporous layer is a layer in contact with the electrically conductive porous substrate, and has a plurality of pores.

The first microporous layer contains an electrically conductive microparticle. As long as the electrically conductive microparticle is contained, its particle size is not limited. The electrically conductive microparticle in the first microporous layer has a particle size of 3 nm or more and 500 nm or less. In cases where the particle size is less than 3 nm, the porosity in the first microporous layer is low, and the gas diffusivity may therefore be low. On the other hand, in cases where the particle size is larger than 500 nm, the number of conductive paths in the first microporous layer may be low, resulting in a high electrical resistance. In the present invention, the electrically conductive microparticle in the first microporous layer preferably has a particle size of 20 nm or more and 200 nm or less.

The particle size of the electrically conductive microparticle herein means a particle size determined using a transmission electron microscope. Under observation using a transmission electron microscope at a measurement magnification of ×500,000, the average of the outer diameters of 100 particles found in the screen is determined to provide the particle size of the electrically conductive microparticle. The outer diameter herein means the maximum diameter of the particle (which means the longer diameter of the particle, corresponding to the longest diameter in the particle). As the transmission electron microscope, JEM-4000EX, manufactured by JEOL Ltd., or its equivalent may be used.

In the present invention, examples of the electrically conductive microparticle include carbon black, which is a "particulate electrically conductive material"; carbon nanotubes, carbon nanofibers, and chopped carbon fibers, which are "electrically conductive materials having a linear portion"; and graphene and graphite, which are "flake electrically conductive materials". Among these, the electrically conductive microparticle contained in the first microporous layer is preferably a "particulate electrically conductive material". From the viewpoint of the cost, safety, and stability of the product quality, carbon black is especially preferably used. That is, in the present invention, the first microporous layer preferably contains carbon black. As the carbon black, acetylene black is preferably used since it contains less impurities, and is therefore less likely to reduce the activity of a catalyst. An example of the standard for the content of impurities in the carbon black is the ash content. It is preferred to use a carbon black whose ash content is not more than 0.1% by mass. The lower the ash content in the carbon black, the more preferred. A carbon black whose ash content is 0% by mass, that is, a carbon black free from ash, is especially preferred.

The second microporous layer is described below. The second microporous layer is a layer containing an electrically conductive material with a linear portion, and having a plurality of pores. The second microporous layer is present outside of the first microporous layer as seen from the electrically conductive porous substrate side in the gas diffusion electrode. The second microporous layer is present as the outermost layer of the microporous layers.

The term "linear" herein means an elongated shape like a line, more specifically, a shape with an aspect ratio of not less than 10. Thus, "having a linear portion" means that the material has a portion having a shape with an aspect ratio of not less than 10.

As the electrically conductive material having a linear portion in the second microporous layer, an electrically conductive material having a linear portion with an aspect ratio of 30 or more and 5000 or less is used. In cases where the aspect ratio of the linear portion is less than 30, the electrically conductive material in the second microporous layer is less entangled, and cracks may be formed in the second microporous layer. On the other hand, in cases where the aspect ratio of the linear portion is more than 5000, the electrically conductive material in the second microporous layer is excessively entangled, and aggregation of the solid component in the second microporous layer occurs, leading to a rough surface of the second microporous layer, which is problematic. In the present invention, in the electrically conductive material having a linear portion in the second microporous layer, the aspect ratio of the linear portion is more preferably 35 or more and 3000 or less, still more preferably 40 or more and 1000 or less.

Here, the aspect ratio of the linear portion of the electrically conductive material is calculated as follows. The aspect ratio means the average length (µm) / the average diameter (µm). The average length is determined by taking a photograph(s) using a microscope such as a scanning electron microscope or a transmission electron microscope at a magnification of not less than 1000, randomly selecting 10 different linear portions, measuring the lengths of these portions, and then calculating the average. The average diameter is determined by taking a photograph(s), using a microscope such as a scanning electron microscope or a transmission electron microscope at a magnification of not less than 10,000, of each of the 10 portions randomly selected for determining the average length, measuring the diameters of these 10 linear portions, and then calculating the average. As the scanning electron microscope, SU8010, manufactured by Hitachi, Ltd., or its equivalent may be used.

In the present invention, examples of the electrically conductive material having a linear portion include linear carbon, titanium oxide, and zinc oxide. The electrically conductive material having a linear portion is preferably linear carbon. Examples of the linear carbon include vapor-grown carbon fibers (VGCF), carbon nanotubes, carbon nanohoms, carbon nanocoils, cup-stacked carbon nanotubes, bamboo-like carbon nanotubes, graphite nanofibers, and chopped carbon fibers. Among these, VGCF is preferably used as the electrically conductive material having a linear portion since it can have a large aspect ratio in the linear portion, and has excellent electrical conductivity and mechanical properties. That is, in the present invention, the second microporous layer preferably contains VGCF.

The first microporous layer and the second microporous layer are required to have properties such as electrical conductivity, gas diffusivity, water drainage, moisture retention, and thermal conductivity, as well as strong acid resistance in the anode side and oxidation resistance in the cathode side inside a fuel cell. Therefore, the first microporous layer and the second microporous layer preferably contain a water-repellent resin such as a fluorine resin in addition to the electrically conductive microparticle, and the electrically conductive material having a linear portion. Examples of the fluorine resin contained in the first microporous layer and the second microporous layer include PTFE, FEP, PFA, and ETFA, similarly to the fluorine resin preferably used for the water-repellent treatment of the electrically conductive porous substrate. In terms of having particularly high water repellency, PTFE or FEP is preferable.

In order for a gas diffusion electrode to have a microporous layer, a coating solution for formation of a microporous layer, that is, a microporous-layer-forming coating solution (hereinafter referred to as microporous-layer coating solution), is commonly applied to an electrically conductive porous substrate. The microporous-layer coating solution usually contains the electrically conductive microparticle or the electrically conductive material having a linear portion described above, and a dispersion medium such as water or alcohol. As a dispersant for dispersing the electrically conductive microparticle or the electrically conductive material having a linear portion, a surfactant or the like is often included therein. In cases where a water-repellent resin is to be contained in the microporous layer, the water-repellent resin is preferably included in the microporous-layer coating solution in advance.

The concentration of electrically conductive microparticles and the electrically conductive material having a linear portion in the microporous-layer coating solution is preferably not less than 5% by mass, more preferably not less than 10% by mass from the viewpoint of productivity. There is no upper limit to the concentration as long as the viscosity, the dispersion stability of the electrically conductive microparticles and the electrically conductive material having a linear portion, the coating properties of the coating solution, and the like are suitable. However, practically, when the concentration is more than 50% by mass, the suitability as a coating solution may be impaired. In particular, according to a study by the present inventors, when acetylene black is used as the electrically conductive microparticle, the upper limit is about 25% by mass in cases of an aqueous coating solution. When the concentration is higher than this, reaggregation of acetylene black occurs, resulting in so-called percolation, and the coating properties of the coating solution are impaired due to the rapid increase in viscosity.

Examples of roles of the microporous layer include the following: (1) effect of prevention of condensation of water vapor generated in a cathode; (2) prevention of penetration of a catalyst layer into a coarse electrically conductive porous substrate; (3) reduction of contact resistance with a catalyst layer; and (4) effect of prevention of mechanical damage of an electrolyte membrane due to transfer of coarseness of an electrically conductive porous substrate to the electrolyte membrane. Even by reduction of coarseness of the electrically conductive porous substrate using a microporous layer, mechanical damage of the electrolyte membrane cannot be avoided in cases where the microporous layer has a coarse surface or cracked surface. The microporous layer is therefore required to have a smooth surface, and to be free from cracks.

The microporous-layer coating solution is prepared by dispersing the electrically conductive microparticles or the electrically conductive material having a linear portion using a dispersant as described above. For the dispersion of the electrically conductive microparticles or the electrically conductive material having a linear portion, it is preferred to use 0.1% by mass or more and 5% by mass or less of the dispersant with respect to 100% by mass of the total content of the electrically conductive microparticles or the electrically conductive material having a linear portion and the dispersant. However, in order to stabilize the dispersion for a long period of time to prevent an increase in the viscosity of the coating solution, thereby preventing separation in the solution, it is effective to increase the amount of the dispersant added.

For preventing the microporous-layer coating solution to flow into pores in the electrically conductive porous substrate to cause strike-through, the viscosity of the microporous-layer coating solution is preferably kept at not less than 1000 mPa·s. On the other hand, in cases where the viscosity is too high, the coating properties are deteriorated. In view of this, its upper limit is about 25 Pa s. A preferred range of the viscosity is 3000 mPa·s or more and 20 Pa·s or less, more preferably 5000 mPa·s or more and 15 Pa s or less. In the present invention, formation of the first microporous layer is followed by formation of the second microporous layer by application of the second microporous-layer coating solution. In this process, the viscosity of the second microporous-layer coating solution is preferably as low as not more than 10 Pa·s.

For keeping the viscosity of the microporous-layer coating solution high as described above, addition of a thickener is effective. The thickener used in this process may be one which is generally known. Examples of thickeners preferably used include methyl cellulose-based, polyethylene glycol-based, or polyvinyl alcohol-based thickeners.

One substance having the functions of both the dispersant and the thickener may be used, or materials suitable for each function may be selected. In cases where the thickener and the dispersant are separately selected, it is preferred to select those that do not destroy the dispersion system of the electrically conductive microparticles and the dispersion system of the fluorine resin, which is a water-repellent resin. The dispersant and the thickener are herein collectively referred to as surfactant. In the present invention, the total amount of the surfactant is preferably not less than 50 parts by mass, more preferably not less than 100 parts by mass, still more preferably not less than 200 parts by mass, with respect to the mass of the electrically conductive microparticles or the electrically conductive material having a linear portion added. The upper limit of the amount of the surfactant added is usually not more than 500 parts by mass with respect to the mass of the electrically conductive microparticles or the electrically conductive material having a linear portion added. In cases where the amount exceeds this, a large amount of water vapor or cracked gas may be generated later in the sintering step, leading to deterioration of safety and productivity.

The application of the microporous-layer coating solution to the electrically conductive porous substrate can be carried out using various kinds of commercially available coating devices. Examples of coating methods that may be used therefor include screen printing, rotary screen printing, spraying, intaglio printing, gravure printing, die coating, bar coating, blade coating, and comma coating. Dye coating is preferred since the coating amount can be made constant independent of the surface roughness of the electrically conductive porous substrate. In a case where a gas diffusion electrode is incorporated in a fuel cell, and smoothness of the coating surface is required for increasing its adhesion to a catalyst layer, a blade coater or a comma coater is preferably used. The above examples of the coating method are merely for the illustration purpose, and the method is not limited thereto.

After the application of the microporous-layer coating solution, the dispersion medium (water, in cases of an aqueous system) in the microporous-layer coating solution is removed by drying, if necessary. In cases where the dispersion medium is water, the temperature during the drying after the application is preferably from room temperature (about 20°C) to 150°C, more preferably 60°C or more and 120°C or less. The drying of the dispersion medium (water, for example) may be carried out at once in the later sintering step.

In general, after the application of the microporous-layer coating solution, sintering is carried out for the purpose of removing the surfactant used for the microporous-layer coating solution, and for the purpose of once dissolving the water-repellent resin to bind the electrically conductive microparticles and the electrically conductive material having a linear portion.

The sintering is preferably carried out at a temperature of 250°C or more and 400°C or less, although the temperature depends on the boiling point or the decomposition temperature of the surfactant added. In cases where the sintering temperature is less than 250°C, achievement of the removal of the surfactant may be insufficient, or a vast period of time may be required for complete removal of the surfactant. In cases where the sintering temperature exceeds 400°C, degradation of the water-repellent resin may occur.

From the viewpoint of productivity, the sintering time is as short as possible, preferably not more than 20 minutes, more preferably not more than 10 minutes, still more preferably not more than 5 minutes. However, sintering in a very short period may cause rapid generation of vapor of the surfactant and degradation product, and poses a risk of ignition in cases where the sintering is carried out in the air.

An optimal temperature and length of time for the sintering are selected taking into account the melting point or the decomposition temperature of the water-repellent resin, and the decomposition temperature of the surfactant. Although the drying and the sintering may be carried out after each of the application of the first microporous-layer coating solution and the application of the second microporous-layer coating solution, they are preferably carried out, as described later, at once after the application of the first microporous-layer coating solution and the application of the second microporous-layer coating solution.

In the present invention, the microporous layers to be provided on the electrically conductive porous substrate are laminated to at least one side of the electrically conductive porous substrate, which microporous layers are constituted by at least two layers. The microporous layer in contact with the electrically conductive porous substrate is referred to as a first microporous layer, and the microporous layer laminated to the outside of the first microporous layer as seen from the electrically conductive porous substrate side is referred to as a second microporous layer.

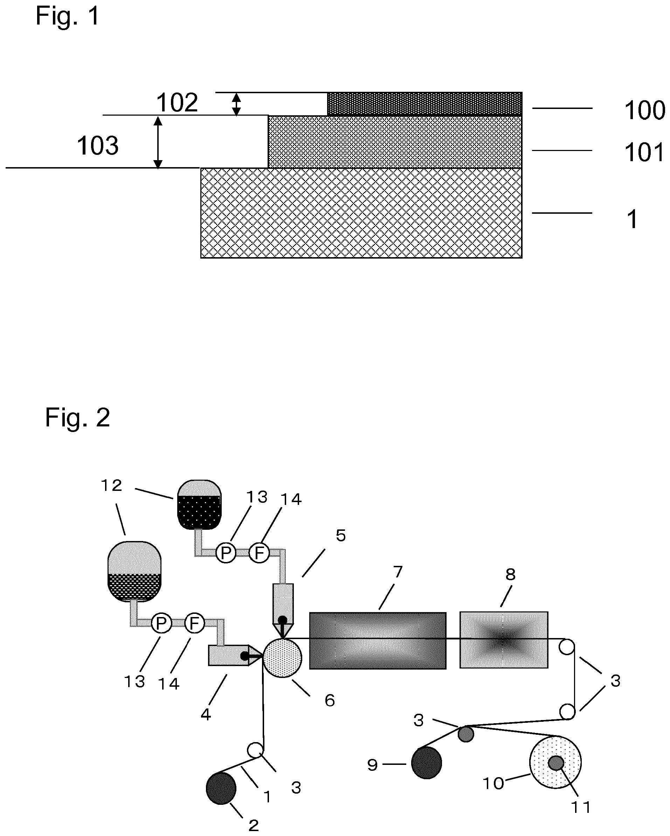

The microporous layers are described below in more detail using Fig. 1.

The first microporous layer 101 in the present invention is provided by directly applying a coating solution for formation of the first microporous layer (hereinafter referred to as first microporous-layer coating solution) to an electrically conductive porous substrate.

In terms of the thickness of the first microporous layer 103 in the present invention, the total thickness of the microporous layer is not less than 10 µm for producing the effect of preventing mechanical damage of an electrolyte membrane due to transfer of coarseness of the electrically conductive porous substrate to the electrolyte membrane. More preferably, the thickness of the first microporous layer alone is not less than 9.9 µm, still more preferably not less than 10 µm. However, the thickness of the first microporous layer is preferably less than 50 µm since gas diffusivity needs to be secured even in the presence of the second microporous layer laminated thereon.

The second microporous layer 100 in the present invention is formed by applying a coating solution for formation of the second microporous layer (hereinafter referred to as second microporous-layer coating solution) to the outside of the first microporous layer as seen from the electrically conductive porous substrate side. In cases where the microporous layer is composed of only the two layers, that is, the first microporous layer and the second microporous layer, the second microporous-layer coating solution is applied to the surface of the first microporous layer. The second microporous layer plays roles in prevention of penetration of a catalyst layer into a coarse electrically conductive porous substrate, and reduction of contact resistance with the catalyst layer.

In order for the second microporous layer to have the effect of preventing penetration of a catalyst layer and reduction of contact resistance with the catalyst layer, the number of cracks with a length of not less than 100 µm and a width of not less than 10 µm in the second microporous layer in the present invention is preferably not more than 10 per 1-cm² surface of the second microporous layer. In an especially preferred mode, there is no such a crack, that is, the number of cracks is zero.

Further, in order for the second microporous layer to have the effect of prevention of penetration of a catalyst layer and reduction of contact resistance with the catalyst layer, the surface roughness of the microporous layer is preferably 0.1 µm or more and 4 µm or less. The surface roughness of the microporous layer herein means the surface roughness on the outermost layer of the microporous layers.

To measurement of the surface roughness, various surface roughness meters are applicable. Since the microporous layer is relatively fragile, a non-contact measuring device is preferably used. Examples of the non-contact measuring device include VX-100, a laser microscope manufactured by Keyence Corporation.

Further, in order for the second microporous layer to have the effect of prevention of penetration of a catalyst layer and reduction of contact resistance with the catalyst layer, the thickness of the second microporous layer 102 is not less than 0.1 µm and less than 10 µm. In cases where the thickness of the second microporous layer is less than 0.1 µm, the surface of the first microporous layer cannot be completely covered with the second microporous layer, and therefore the cracks present in the first microporous layer cannot be hidden. Thus, the surface of the second microporous layer cannot be made smooth in some cases. In cases where the thickness is not less than 10 µm, the gas diffusivity may decrease. The thickness of the second microporous layer is preferably not more than 7 µm, more preferably not more than 5 µm.

The thickness of the gas diffusion electrode or the electrically conductive porous substrate can be measured using a micrometer or the like while applying a load of 0.15 MPa to the substrate. The thickness of the microporous layer can be determined by subtracting the thickness of the electrically conductive porous substrate from the thickness of the gas diffusion electrode. In cases where the microporous layer is constituted by two layers, the thickness of the second microporous layer can be defined, as shown in Fig. 1, as the difference in the thickness between a portion where the second microporous layer is applied and a portion where the second microporous layer is not applied as observed during the application of the second microporous layer onto the electrically conductive porous substrate coated with the first microporous layer. In formation of the first microporous layer and the second microporous layer by their application to the substrate, in cases where the thickness of each layer is to be adjusted, the above measurement method using a micrometer is used.

In the state where the gas diffusion electrode has an electrically conductive porous substrate, first microporous layer, and second microporous layer, the thickness of each layer can be determined by employing a method in which an ion milling apparatus such as IM4000, manufactured by Hitachi High-Technologies Corporation, is used to cut the gas diffusion electrode in the thickness direction, and the perpendicular cross-section (cross-section in the thickness direction) is observed with a scanning electron microscope (SEM), followed by calculating the thickness based on the obtained SEM image.

For securing power generation performance, the gas diffusion electrode of the present invention preferably has a through-plane direction gas diffusivity of not less than 30%, more preferably not less than 32%. The higher the through-plane direction gas diffusivity, the better. However, since an excessive pore volume after incorporation into a fuel cell may affect the capacity to maintain the structure upon application of a pressure to the inside of the cell, the upper limit of the through-plane direction gas diffusivity is thought to be about 40%.

For securing power generation performance, the gas diffusion electrode of the present invention preferably has a through-plane direction electrical resistance of not more than 4.0 mQ cm² upon pressing at 2.4 MPa. The lower the through-plane direction electrical resistance, the more preferred. Since it is realistically difficult to achieve a through-plane direction electrical resistance of less than 0.5 mQ cm² upon pressing at 2.4 MPa, the lower limit is about 0.5 mQ cm² upon pressing at 2.4 MPa.

In the present invention, it is preferred to apply the first microporous-layer coating solution on the surface of the electrically conductive porous substrate, followed by applying the second microporous-layer coating solution thereon such that the thickness of the second microporous layer becomes less than 10 µm. Uniform application of such a thin film can also be effectively carried out by application of a wet-on-wet lamination technique in which the first microporous-layer coating solution is applied to the electrically conductive porous substrate, and the second microporous-layer coating solution is then immediately applied without drying. In general, an electrically conductive porous substrate has a rough surface, and its irregularity reaches about 10 µm in some cases. Application of the first microporous-layer coating solution to such a surface having a large irregularity cannot completely solve the irregularity after drying. Since a thin film of less than 10 µm is suitable as the second microporous layer, the viscosity of the second microporous-layer coating solution is preferably rather low. When formation of a thin film on the above-described irregular surface is attempted using such a low-viscosity coating solution, the solution tends to accumulate (that is, to form a thick film) on recessed portions of the irregular surface, while the solution does not stay on protruded portions, resulting in failure to form the thin film of the second microporous layer in extreme cases. In order to prevent this, the first microporous-layer coating solution and the second microporous-layer coating solution may be laminated before drying, and the layers may then be dried at once, to allow uniform formation of the thin film of the second microporous layer on the surface of the first microporous layer

Thus, by carrying out the multi-layer application without drying each layer after its application, and drying the layers at once after the completion of the multi-layer application, the process can be carried out using only one dryer, and the application step can be shortened, enabling reduction of the equipment cost and the manufacturing space. The shortening of the step also enables reduction of loss of the electrically conductive porous substrate, which is generally expensive, in the step.

The multi-layer application can be carried out by application of, for example, a method in which the first microporous-layer coating solution is applied using a die coater, and the second microporous-layer coating solution is also applied using a die coater; a method in which the first microporous-layer coating solution is applied using various roll coaters, and the second microporous-layer coating solution is applied using a die coater; a method in which the first microporous-layer coating solution is applied using a comma coater, and the second microporous-layer coating solution is applied using a die coater; a method in which the first microporous-layer coating solution is applied using a lip coater, and the second microporous-layer coating solution is applied using a die coater; or a method in which the first microporous-layer coating solution and the second microporous-layer coating solution are laminated using a slide die coater before their application to the substrate. In particular, for uniform application of a high-viscosity coating solution, the first microporous-layer coating solution is preferably applied using a die coater or a comma coater.

The above coating methods using a die coater and/or a comma coater are described in many existing literatures such as "All About Converting" (Converting Technical Institute, ed.). Die coating is a mode in which a coating solution is applied onto a substrate through a die to be used for uniformly distributing a preliminarily measured coating solution in a transverse direction. Comma coating is a coating method in which, similarly to knife coating, a preliminarily thickly placed coating solution is scraped off using a roll knife set to a certain height, to make the coated surface smooth irrespective of irregularity of the substrate.

In a embodiment of the present invention, primarily, a surface layer such as a second microporous layer is formed as uniformly as possible as a thin film of not less than 0.1 µm and less than 10 µm. It is desired to increase, as much as possible, adhesion between an electrolyte membrane coated with a catalyst on both sides, and the gas diffusion electrode (the contact area between the catalyst layer surface and the microporous layer surface of the gas diffusion electrode). Thus, the microporous layer surface of the gas diffusion electrode is preferably made as smooth as possible. A method for applying a catalyst ink to the gas diffusion electrode side is also generally known (GDE method). Also in such a case, the microporous layer surface of the gas diffusion electrode is preferably made as smooth as possible for uniform application of the catalyst ink. In cases where the smoothness is required as described above, the first microporous-layer coating solution may be first applied using a comma coater or the like to decrease roughness of the substrate, and then the second microporous-layer coating solution may be applied using a die coater, to obtain higher smoothness.

As an index of the smoothness, the surface roughness Ra is used. Preferably, the gas diffusion electrode of the present invention has the second microporous layer as the outermost layer of the microporous layers, and the second microporous layer preferably has a surface roughness Ra of not more than 4 µm, more preferably not more than 3 µm. In cases where Ra is larger than 4 µm, adhesion to the catalyst layer is poor. On the other hand, taking, for example, application of a catalyst ink to the microporous layer surface into account, the lower limit of the surface roughness Ra is thought to be about 0.1 µm. In cases where a carbon paper is used as the electrically conductive porous substrate, the substrate roughness is generally as large as not less than 10 µm. Therefore, even in cases where the first and second microporous layers are provided thereon, it is difficult for the second microporous layer, which is placed as the outermost layer, to have a surface roughness Ra of less than 2 µm.

A manufacturing apparatus suitable for production of the gas diffusion electrode of the present invention contains: an unwinding machine for unwinding a long electrically conductive porous substrate wound in a roll shape; a first coater for application of a first microporous-layer coating solution to an electrically conductive porous substrate unwound by the unwinding machine; a second coater for application of a second microporous-layer coating solution to the electrically conductive porous substrate to which the first microporous-layer coating solution has been applied but which has not been substantially dried, which second coater is arranged in the same side as the substrate side in which the first coater is arranged; a dryer for drying the electrically conductive porous substrate to which the first microporous-layer coating solution and the second microporous-layer coating solution have been applied; and a wind-up machine for winding up the gas diffusion electrode obtained.

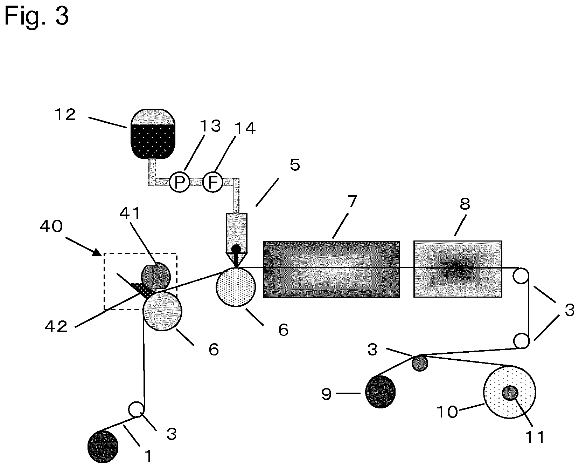

Fig. 2 and Fig. 3 show examples of especially preferred manufacturing apparatuses for production of the gas diffusion electrode of the present invention.

In the manufacturing apparatus shown in Fig. 2, a long electrically conductive porous substrate 1 is unwound from an unwinding machine 2, and conveyed while being supported as appropriate by a guide roll 3, followed by application of a first microporous-layer coating solution on one side of the electrically conductive porous substrate by a first die coater 4, which is a first coater. In this process, the first microporous-layer coating solution is usually supplied to the die coater from a coating solution tank 12 by a solution supply pump 13. The first microporous-layer coating solution is preferably filtered through a filter 14. By a second die coater 5, which is a second coater arranged in the same substrate side as the first die coater 4, a second microporous-layer coating solution is applied to the surface to which the first microporous-layer coating solution has been applied, and drying is carried out at once using a dryer 7, followed by winding up of the gas diffusion electrode by a wind-up machine 9. The second microporous-layer coating solution is also usually supplied to the die coater from a coating solution tank 12 by a solution supply pump 13. The second microporous-layer coating solution is preferably filtered through a filter 14. As shown in Fig. 2, it is preferred to perform in-line sintering by placement of a sintering machine 8 after the dryer 7. In the application of the microporous-layer coating solutions by the die coaters, a back roll 6 may be used. In the winding up, an inserting paper 10 unwound from an inserting paper unwinding machine 11 may be wound together with the product, for protection of the coated surface.

In the manufacturing apparatus shown in Fig. 3, a comma coater 40 is arranged instead of the first die coater 4 in Fig. 2. When the application is carried out using the comma coater, the substrate is conveyed while a coating material is supplied to a solution dam 42, and the coating material is scraped off by a knife roll 41 such that a desired coating amount is achieved.

As shown in Fig. 2 or 3, in a case where a plurality of layers are arranged on a substrate, and the plurality of layers are dried at once, the dryer can be simplified, and the process from the unwinding to the winding up can be shortened. Thus, the productivity can be increased, and the loss of the substrate upon its breakage can be reduced.

The gas diffusion electrode of the present invention is used as a fuel cell by constructing a single cell by attaching the gas diffusion electrode to each side of an electrolyte membrane having a catalyst layer on each side, such that the catalyst layer is in contact with the gas diffusion electrode, and incorporating a member(s) such as a separator. That is, the fuel cell of the present invention contains the gas diffusion electrode of the present invention described above. In the production of the fuel cell of the present invention, the fuel cell is preferably constructed such that the second microporous layer is in contact with the catalyst layer.

### EXAMPLES

The present invention is described below more concretely by way of Examples. The materials, the methods for preparing the electrically conductive porous substrates, and the methods for evaluating the cell performances of the fuel cells used in the Examples were as follows.

### <Materials>

### A: Electrically conductive porous substrates

· Carbon paper having a thickness of 150 µm and a porosity of 85%: This was prepared as follows.

Polyacrylonitrile-based carbon fiber "TORAYCA" (registered trademark) T300-6K (average single-fiber diameter, 7 µm; number of single fibers, 6000), manufactured by Toray Industries, Inc., was cut to a length of 6 mm, and subjected to continuous papermaking together with broadleaf bleached kraft pulp (LBKP) manufactured by Alabama River and craft market pulp (hardwood) using water as a papermaking medium, followed by immersion in a 10% by mass aqueous polyvinyl alcohol solution, and then drying. After this papermaking process, the paper was wound up into a roll shape, to obtain a long sheet of carbon fiber paper having an areal weight of carbon staple of 15 g/m². Per 100 parts by mass of the carbon fiber paper, the amount of pulp added was 40 parts by mass, and the amount of polyvinyl alcohol attached was equivalent to 20 parts by mass.

A dispersion was prepared by mixing a flake graphite BF-5A (average particle size, 5 µm; aspect ratio, 15), manufactured by Chuetsu Graphite Works Co., Ltd., a phenol resin, and methanol (manufactured by Nacalai Tesque, Inc.) at a mass ratio of 2:3:25. The above carbon fiber paper was continuously impregnated with the above dispersion to a phenol resin impregnation amount of 78 parts by mass per 100 parts by mass of the carbon staple, followed by drying at a temperature of 90°C for 3 minutes. After this resin impregnation step, the carbon paper was wound up into a roll shape, to obtain a resin-impregnated carbon fiber paper. As the phenol resin, a resin prepared by mixing a resol-type phenol resin KP-743K, manufactured by Arakawa Chemical Industries, Ltd., and a novolac-type phenol resin "TAMANOL" (registered trademark) 759, manufactured by Arakawa Chemical Industries, Ltd., at a mass ratio of 1:1 was used. The carbonization yield of this phenol resin (mixture of the resol-type phenol resin and the novolac-type phenol resin) was 43%.

Hot plates were set parallel to each other in a 100-t press manufactured by Kawajiri Co., Ltd., and a spacer was placed on the lower hot plate. While repeatedly opening and closing the press at a hot plate temperature of 170°C and a surface pressure of 0.8 MPa, the resin-impregnated carbon fiber paper, sandwiched between release papers from the upper and lower sides, was intermittently conveyed. During this process, the carbon fiber paper was subjected to compression treatment such that each portion was heat-pressed for 6 minutes in total. The effective pressurization length LP of the hot plates was 1200 mm, and the feed rate LF of the precursor fiber sheet during the intermittent conveyance was 100 mm. LF/LP was thus 0.08. That is, heat-pressing for 30 seconds, opening the press, and sending the carbon fiber (100 mm) were repeated to perform the compression treatment, and then the paper was wound up into a roll shape.

The compression-treated carbon fiber paper was introduced, as a precursor fiber sheet, into a heating furnace at a maximum temperature of 2400°C in which a nitrogen gas atmosphere was maintained. While being made to travel continuously in the heating furnace, the sheet was fired at a temperature rise rate of about 500°C/min. (400°C/min. at temperatures of not more than 650°C, and 550°C/min. at temperatures higher than 650°C). After this carbonization step, the sheet was wound up into a roll shape, to obtain a carbon paper. The obtained carbon paper had a density of 0.25 g/cm³ and a porosity of 85%.

· Carbon paper having a thickness of 180 µm and a porosity of 85%:
A carbon paper having a thickness of 180 µm and a porosity of 85% was obtained in the same manner as the carbon paper having a thickness of 150 µm and a porosity of 85% except that the carbon fiber areal weight and the spacer thickness in the compression treatment were adjusted such that the thickness after carbonization was 180 µm.

### B: Water-repellent resin

· "POLYFLON" (registered trademark) PTFE dispersion D-210C (manufactured by Daikin Industries, Ltd.)

### C: Surfactant

· "TRITON" (registered trademark) X-114 (manufactured by Nacalai Tesque, Inc.)

### <Surface Roughness Measurement>

The microporous layer surface of the gas diffusion electrode to be measured was subjected to measurement of roughness using a laser microscope VK-X100, manufactured by Keyence Corporation, at an object lens magnification of ×10 without cut-off, to determine the arithmetic average roughness Ra. This process was carried out for 10 viewing areas, and the average was determined to provide the surface roughness value.

### <Measurement of Number of Cracks in Second Microporous Layer>

The surface of the second microporous layer of the gas diffusion electrode to be measured was observed using an SU8010 scanning electron microscope (SEM) manufactured by Hitachi, Ltd. at a magnification of ×20, and the number of cracks having a length of not less than 100 µm and a width of not less than 10 µm was visually counted. The number of such cracks per 10 cm² was defined as the number of cracks in the second microporous layer.

### <Through-plane direction Gas Diffusivity>

Using a steam gas/water vapor permeation diffusion evaluation device (MVDP-200C) manufactured by Seika Corporation, the gas to be measured for diffusivity is passed through one side of the gas diffusion electrode (primary side), while nitrogen gas is passed through the other side (secondary side). While the pressure difference between the primary side and the secondary side was controlled near 0 Pa (0 ± 3 Pa) (that is, under conditions where there is hardly gas flow due to the pressure difference, and the gas migration phenomenon occurs only by molecular diffusion), the gas concentration in an equilibrium state was measured with a gas concentration meter in the secondary side. The obtained value (%) was used as an index of the through-plane direction gas diffusivity.

### <Through-plane direction Electrical Resistance>

The gas diffusion electrode is cut into a size of 40 mm × 40 mm, and sandwiched between gold-plated smooth metal rigid electrodes from the upper and lower sides, followed by application of an average pressure of 2.4 MPa. By measuring the voltage of the upper and lower electrodes upon passing a current of 1 A to the upper and lower electrodes in this state, the electrical resistance per unit area was calculated, and the resulting value was used as an index of the electrical resistance.

### (Example 1)

While a carbon paper having a thickness of 150 µm and a porosity of 85% wound in a roll shape was conveyed using a wind-up conveyor, the carbon paper was immersed in an immersion tank filled with a water-repellent resin dispersion in which a fluorine resin is dispersed at a concentration of 2% by mass in water, to perform water-repellent treatment. The carbon paper was then dried with a dryer 7 set at 100°C, and wound up by a wind-up machine, to obtain a water-repellent-treated electrically conductive porous substrate. As the water-repellent resin dispersion, a dilution prepared by diluting a PTFE dispersion D-210C with water such that the PTFE concentration became 2% by mass was used.

Subsequently, a wind-up continuous coater with a conveyor having an unwinding machine 2, guide roll 3, back roll 6, inserting paper unwinding machine 11, and wind-up machine 9; and with two die coaters (4, 5), dryer 7, and sintering machine 8; as outlined in Fig. 2 was provided.

As the water-repellent-treated electrically conductive porous substrate, a raw sheet in which a 400-m sheet of carbon paper having a thickness of 150 µm, porosity of 85%, and width of about 400 mm is wound in a roll shape was placed in the unwinding machine 2.

The raw sheet was conveyed using drive rolls arranged in the unwinding section, the wind-up section, and the coater sections. First, a first microporous-layer coating solution is applied using a first die coater 4, immediately followed by application of a second microporous-layer coating solution by a second die coater 5. Thereafter, moisture was removed by drying with hot air at 100°C by a dryer 7, and then sintering was performed by a sintering machine 8 whose temperature was set to 350°C, followed by winding up by a wind-up machine 9.

The microporous-layer coating solutions were prepared as follows.

### First microporous-layer coating solution:

A coating solution was prepared by kneading 7.1 parts by mass of acetylene black (which is referred to as AB in the table) (particle size, 35 nm), 2.4 parts by mass of a PTFE dispersion, 14.2 parts by mass of a surfactant, and 76.3 parts by mass of purified water in a planetary mixer. The coating solution viscosity at this time was 7.5 Pa s.

### Second microporous-layer coating solution:

A coating solution was prepared by kneading 5.0 parts by mass of a vapor-grown carbon fiber "VGCF" (aspect ratio, 50), 0.6 part by mass of a PTFE dispersion, 10.0 parts by mass of a surfactant, and 84.4 parts by mass of purified water in a planetary mixer. The kneading in the planetary mixer was carried out for twice the length of time compared to the case of the first microporous-layer coating solution, to increase the degree of dispersion of the coating solution. The coating solution viscosity at this time was 1.1 Pa s.

The application of the first microporous-layer coating solution was carried out such that the areal weight of the microporous layer after sintering was adjusted to 16 g/m². The thickness of the first microporous layer at this time was 25 µm. The application of the second microporous-layer coating solution was carried out such that the thickness of the second microporous layer was adjusted to 3 µm.

Table 1 shows the results of such measurement of the surface roughness, number of cracks, through-plane direction gas diffusivity, and electrical resistance of the microporous layer of the gas diffusion electrode prepared.

### (Example 2)

A gas diffusion electrode was obtained in the same manner as in Example 1 except that thermal black (which is referred to as SB in the table) (particle size, 85 nm) was used as the electrically conductive microparticle for the first microporous layer.

### (Example 3)

A gas diffusion electrode was obtained in the same manner as in Example 1 except that a vapor-grown carbon fiber "VGCF" (particle size, 150 nm) was used as the electrically conductive microparticle for the first microporous layer.

### (Outside of scope of the invention Example 4)

A gas diffusion electrode was obtained in the same manner as in Example 1 except that a carbon nanotube (particle size, 2 nm) was used as the electrically conductive microparticle for the first microporous layer.

### (Outside of scope of the invention Example 5)

A gas diffusion electrode was obtained in the same manner as in Example 1 except that graphite (particle size, 8000 nm) was used as the electrically conductive microparticle for the first microporous layer.

### (Outside of scope of the invention Example 6)

A gas diffusion electrode was obtained in the same manner as in Example 1 except that a carbon nanotube (aspect ratio, 6000) was used as the electrically conductive material for the second microporous layer.

### (Comparative Example 1)

A gas diffusion electrode was obtained in the same manner as in Example 1 except that only the first microporous layer was used as a microporous layer. This case resulted in a high surface roughness of the microporous layer and a large number of cracks in the microporous layer.

### (Comparative Example 2)

A gas diffusion electrode was obtained in the same manner as in Example 1 except that only the first microporous layer was used as a microporous layer, and that a vapor-grown carbon fiber "VGCF" (particle size, 150 nm) was used as the electrically conductive microparticle for the first microporous layer. This case resulted in a high surface roughness of the microporous layer.

### (Comparative Example 3)

A gas diffusion electrode was obtained in the same manner as in Example 1 except that acetylene black (aspect ratio, 1) was used as the electrically conductive material for the second microporous layer. This case resulted in a large number of cracks in the microporous layer.

### (Comparative Example 4)

A gas diffusion electrode was obtained in the same manner as in Example 1 except that a vapor-grown carbon fiber "VGCF" (particle size, 150 nm) was used as the electrically conductive microparticle for the first microporous layer, and that acetylene black (aspect ratio, 1) was used as the electrically conductive material for the second microporous layer. This case resulted in a large number of cracks in the microporous layer.

**[Table. 1]**

| | Unit | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| Type of the electrically conductive microparticles contained in the first microporous layer | - | AB | SB | VGCF | CNT | Graphite | AB | AB | VGCF | AB | VGCF |
| Particle size of the electrically conductive microparticles | nm | 35 | 85 | 150 | 2 | 8000 | 35 | 35 | 150 | 35 | 150 |
| Type of the electrically conductive material having a linear portion contained in the second microporous layer | - | VGCF | VGCF | VGCF | VGCF | VGCF | CNT | - | - | AB | AB |
| Aspect ratio of the electrically conductive material having a linear portion | - | 50 | 50 | 50 | 50 | 50 | 6000 | - | - | 1 | 1 |
| Surface roughness of the microporous layers | µm | 3.1 | 3.5 | 2.6 | 3.6 | 3.8 | 7.5 | 8.9 | 9.6 | 3.4 | 3.2 |
| Number of cracks in the second microporous layer | cracks /cm² | 1 | 2 | 1 | 1 | 2 | 1 | 20 | 1 | 18 | 19 |
| Through-plane direction gas diffusivity | % | 32 | 33 | 34 | 28 | 34 | 32 | 33 | 35 | 31 | 32 |
| Through-plane direction electrical resistance | mΩ cm² | 3.6 | 3.7 | 3.5 | 3.6 | 6.5 | 3.4 | 3.9 | 3.4 | 4.0 | 3.9 |

### DESCRIPTION OF SYMBOLS

1: Electrically conductive porous substrate
2: Unwinding machine
3: Guide roll (not driven)
4: First die coater
5: Second die coater
6: Back roll
7: Dryer
8: Sintering machine
9: Wind-up machine (driven)
10: Inserting paper
11: Unwinding machine (for inserting paper)
12: Coating solution tank
13: Solution supply pump
14: Filter
40: Comma coater
41: Knife roll
42: Solution dam
100: Second microporous layer
101: First microporous layer
102: Thickness of the second microporous layer
103: Thickness of the first microporous layer

## Claims

1. A gas diffusion electrode comprising microporous layers on at least one side of an electrically conductive porous substrate (1),
said microporous layers having at least a first microporous layer (101) in contact with said electrically conductive porous substrate (1), and a second microporous layer (100) positioned as the outermost layer of said microporous layers (101, 100),
**characterized in that** said second microporous layer (100) contains an electrically conductive material having a linear portion with an aspect ratio of 30 or more and 5000 or less, and has a thickness (102) of 0.1 or more and 10 µm or less;
and said first microporous layer (101) contains an electrically conductive microparticle with a particle size of 3 nm or more and 500 nm or less, and has a thickness (103) of 10 µm or more, wherein the particle size is determined by the maximum diameter of the particle using a transmission electron microscope.

2. The gas diffusion electrode according to claim 1, wherein said electrically conductive material having a linear portion is a linear carbon.

3. The gas diffusion electrode according to any one of claims 1 to 2,
wherein said microporous layers (101, 100) have a surface roughness of 0.1 µm or more and 4 µm or less.

4. The gas diffusion electrode according to any one of claims 1 to 3,
wherein the number of cracks with a length of not less than 100 µm and a width of not less than 10 µm in said second microporous layer (100) is not more than 10 per 1-cm² surface of the second microporous layer (100).

5. The gas diffusion electrode according to any one of claims 1 to 4,
wherein the through-plane direction gas diffusivity is not less than 30%.

6. The gas diffusion electrode according to any one of claims 1 to 5,
wherein the through-plane direction electrical resistance is not more than 4.0 mΩ cm² upon pressing at 2.4 MPa.

7. A fuel cell comprising the gas diffusion electrode according to any one of claims 1 to 6.

## Patentansprüche

1. Gasdiffusionselektrode, umfassend mikroporöse Schichten auf mindestens einer Seite eines elektrisch leitfähigen porösen Substrats (1),
wobei die mikroporösen Schichten mindestens eine erste mikroporöse Schicht (101) in Kontakt mit dem elektrisch leitfähigen porösen Substrat (1) und eine zweite mikroporöse Schicht (100), die als die äußerste Schicht der mikroporösen Schichten (101, 100) positioniert ist, aufweisen,
**dadurch gekennzeichnet, dass** die zweite mikroporöse Schicht (100) ein elektrisch leitfähiges Material mit einem linearen Abschnitt mit einem Aspektverhältnis von 30 oder mehr und 5000 oder weniger enthält und eine Dicke (102) von 0,1 oder mehr und 10 µm oder weniger aufweist;
und die erste mikroporöse Schicht (101) ein elektrisch leitfähiges Mikropartikel mit einer Partikelgröße von 3 nm oder mehr und 500 nm oder weniger enthält und eine Dicke (103) von 10 µm oder mehr aufweist, wobei die Partikelgröße durch den maximalen Durchmesser des Partikels unter Verwendung eines Transmissionselektronenmikroskops bestimmt wird.

2. Gasdiffusionselektrode gemäß Anspruch 1, wobei das elektrisch leitfähige Material mit einem linearen Abschnitt ein linearer Kohlenstoff ist.

3. Gasdiffusionselektrode gemäß einem der Ansprüche 1 bis 2, wobei die mikroporösen Schichten (101, 100) eine Oberflächenrauigkeit von 0,1 µm oder mehr und 4 µm oder weniger aufweisen.

4. Gasdiffusionselektrode gemäß einem der Ansprüche 1 bis 3, wobei die Anzahl von Rissen mit einer Länge von nicht weniger als 100 µm und einer Breite von nicht weniger als 10 µm in der zweiten mikroporösen Schicht (100) nicht mehr als 10 pro 1 cm² Oberfläche der zweiten mikroporösen Schicht (100) beträgt.

5. Gasdiffusionselektrode gemäß einem der Ansprüche 1 bis 4, wobei die Gasdiffusionsfähigkeit in Richtung durch die Ebene nicht weniger als 30 % beträgt.

6. Gasdiffusionselektrode gemäß einem der Ansprüche 1 bis 5, wobei der elektrische Widerstand in Richtung durch die Ebene beim Pressen bei 2,4 MPa nicht mehr als 4,0 mQ cm² beträgt.

7. Brennstoffzelle, die die Gasdiffusionselektrode gemäß einem der Ansprüche 1 bis 6 umfasst.

## Revendications

1. Une électrode à diffusion de gaz comprenant des couches microporeuses sur au moins un côté d'un substrat poreux électriquement conducteur (1),
lesdites couches microporeuses ayant au moins une première couche microporeuse (101) en contact avec ledit substrat poreux électriquement conducteur (1), et une deuxième couche microporeuse (100) positionnée comme la couche la plus extérieure desdites couches microporeuses (101, 100),
**caractérisée en ce que** ladite deuxième couche microporeuse (100) contient un matériau électriquement conducteur ayant une portion linéaire avec un rapport d'aspect de 30 ou plus et 5000 ou moins, et a une épaisseur (102) de 0,1 ou plus et 10 µm ou moins ;
et ladite première couche microporeuse (101) contient une microparticule électriquement conductrice avec une taille de particule de 3 nm ou plus et 500 nm ou moins, et a une épaisseur (103) de 10 µm ou plus, dans laquelle la taille de particule est déterminée par le diamètre maximal de la particule en utilisant un microscope électronique à transmission.

2. L'électrode à diffusion de gaz selon la revendication 1, dans laquelle ledit matériau électriquement conducteur ayant une portion linéaire est un carbone linéaire.

3. L'électrode à diffusion de gaz selon l'une quelconque des revendications 1 à 2, dans laquelle lesdites couches microporeuses (101, 100) ont une rugosité de surface de 0,1 µm ou plus et 4 µm ou moins.

4. L'électrode à diffusion de gaz selon l'une quelconque des revendications 1 à 3, dans laquelle le nombre de fissures avec une longueur non inférieure à 100 µm et une largeur non inférieure à 10 µm dans ladite deuxième couche microporeuse (100) n'est pas supérieur à 10 par 1-cm² de surface de la deuxième couche microporeuse (100).

5. L'électrode à diffusion de gaz selon l'une quelconque des revendications 1 à 4, dans laquelle la diffusivité de gaz dans la direction à travers le plan n'est pas inférieure à 30 %.

6. L'électrode à diffusion de gaz selon l'une quelconque des revendications 1 à 5, dans laquelle la résistance électrique dans la direction à travers le plan n'est pas supérieure à 4,0 mΩ cm² lors d'une compression à 2,4 MPa.

7. Une pile à combustible comprenant l'électrode à diffusion de gaz selon l'une quelconque des revendications 1 à 6.
